(19) Europäisches Patentamt
European Patent Office
Office européen des brevets

(11) **EP 3 276 551 A1**

(12) **EUROPEAN PATENT APPLICATION**

(43) Date of publication:
**31.01.2018 Bulletin 2018/05**

(51) Int Cl.:
**G06Q 10/08** *(2012.01)* **G06Q 50/06** *(2012.01)*

(21) Application number: **17163169.0**

(22) Date of filing: **27.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.07.2016 DE 102016213614**

(71) Applicant: **FUJITSU LIMITED**
**Kawasaki-shi,**
**Kanagawa 211-8588 (JP)**

(72) Inventors:
• **HU, Bo**
 **Winchester, SO23 7DT (GB)**
• **MENDES RODRIGUES, Eduarda**
 **Northwood, HA6 2NL (GB)**

(74) Representative: **Wilding, Frances Ward**
**Haseltine Lake LLP**
**Lincoln House, 5th Floor**
**300 High Holborn**
**London WC1V 7JH (GB)**

(54) **A METHOD, COMPUTER PROGRAM AND SYSTEM FOR DETECTING A DISCREPANCY ARISING FROM A MISMATCH BETWEEN INCOMING AND OUTGOING FLOWS OF RESOURCE**

(57) A computer-implemented method for detecting a discrepancy arising from a mismatch between incoming and outgoing flows of resource between a target entity and entities with which the target entity exchanges resources, the method comprising:

receiving data relating to incoming and outgoing resource values of each entity;

generating, using the received data, a network graph to represent relationships between the entities, wherein each entity is represented as a vertex of the network graph and each relationship is represented as an edge, with the incoming and outgoing values of each entity represented as attribute pairs for each relationship at the vertices;

selecting target vertices; and, for each target entity:

calculating an outwards difference between the sum of the outgoing values at the target vertex and the sum of the incoming resource values from the target vertex at neighbouring vertices, and detecting a resource-flow discrepancy if the outwards difference is not equal to zero; and/or

calculating an inwards difference between the sum of incoming values at the target vertex and the sum of outgoing values at neighbouring vertices into the target vertex and detecting a resource-flow discrepancy if the inwards difference is not equal to zero.

Receive resource flow
data for each entity
S10

Generate network
graph with attribute
pairs at vertices
representing entities
S20

Select target entities
S30

Calculate outwards
difference
S40a

Calculate inwards
difference
S40b

FIG. 1

**Description**

The present invention relates to detection of discrepancies in resource flows between entities. The entities may be individuals, natural or legal persons, companies and other separately defined entities which exchange a resource. The resource in question may be physical, natural or man-made, such as a utility, for example in the form of water, gas or electricity, or such as humanitarian aids, for example in the form of boxes of clothing or bags of rice for disaster relief. The resource also may be financial. In particular, a system, computer program and method is provided for graph-based fraud detection of discrepancies in a supply chain. These discrepancies can indicate leaks (in a case where the resource is a fluid, such as oil or gas), connection issues (for example where the resource is electricity) or fraud (when the resource is financial but equally in the other cases).

Fraud detection is gaining momentum recently due to austerity measures exercised in both developed and developing countries in response to hefty debts, leading to increasing pressure on public budgets and new and more sophisticated fraudulent tactics that jeopardise existing approaches. Fraud detection is conventionally performed by subject experts with extensive domain knowledge. Subject experts normally screen the data manually and proceed with inference in the form of "if-then" rules. For instance, in case of social benefit, when two applicants are found to share the same mobile phone numbers, they are considered largely similar and this can indicate a high risk fraud case. Manual data processing and screening, though provide high accuracy in a majority of cases, is time consuming and presents high risk of human errors as well as inter-/intra-individual variants. Automated solutions are therefore desirable.

The cost of fraud to the UK economy is believed to be more than 10 billion pounds per annum. The cost to the entire world economy can be somewhere between 3% and 6% of global GDP. There are different types of fraud which, though sharing some common fundamentals, target different types of victims and can demonstrate different characteristics. However, a majority of fraud cases can be detected through discovering certain patterns.

According to an embodiment of a first aspect of the invention, there is provided a computer-implemented method for detecting a discrepancy arising from a mismatch between incoming and outgoing flows of resource between a target entity and entities with which the target entity exchanges resources, the method comprising:

receiving data relating to incoming and outgoing resource values of each entity; generating, using the received data, a network graph to represent relationships between the entities, wherein each entity is represented as a vertex of the network graph and each relationship is represented as an edge, with the incoming and outgoing values of each entity represented as attribute pairs for each relationship at the vertices;
selecting target vertices, for example, using a characteristic of the vertices in the generated network graph; and, for each target entity:

calculating an outwards difference between the sum of the outgoing values at the target vertex and the sum of the incoming resource values from the target vertex at neighbouring vertices, and detecting a resource-flow discrepancy if the outwards difference is not equal to zero; and/or
calculating an inwards difference between the sum of incoming values at the target vertex and the sum of outgoing values at neighbouring vertices into the target vertex and detecting a resource-flow discrepancy if the inwards difference is not equal to zero.

The inventors have come to the realisation that intricacies among behaviour of individuals involved in fraud cases lend themselves to graph based methods.

Invention embodiments provide a method, a computer program and a computing apparatus (or system) which can use graph algorithms and graph-based heuristics to detect discrepancies in resource flow between entities. These discrepancies can be applied in fraud detection within a supply chain and discrepancies detection in finance reporting systems, e.g. revenue reporting. This graph-based approach may also benefit from a parallel computation model to significantly increase the performance by initiating light computation (perhaps simultaneously) from multiple target graph vertices.

Difference in utility/data/money/traffic flow can be detected while influence of discrepancies which may represent fraudulent behaviour or connection issues/leaks can additionally be propagated to present a complete picture of trading network anomalies.

The way used to select target vertices may be any that is suitable. In one embodiment it is expressed as a numerical exposure (a numerical value based on one or more characteristics of a vertex which indicate a higher tendency to exhibit discrepancies, without calculation of any discrepancies) and preferably indicates a target vertex if the numerical exposure is beyond a threshold. The numerical exposure may be above the threshold if it represents a more suspicious characteristic (a higher tendency to exhibit discrepancies, based on the vertex characteristics, without calculation of any discrepancies).

In one general example, the numerical exposure (selection) is based on connectivity of the vertex, preferably on the level of neighbour vertices which are leaf vertices, or on the level of triangles including the vertex in the network graph.

In another general example, the numerical exposure (selection) is based on a level of ingoing and/or outgoing resource flow in comparison to the number of neighbour vertices.

In a specific example, the numerical exposure (selection) is determined in dependence upon the ratio of the number of triangles including the vertex's neighbours to the total number of the vertex's neighbours.

In a further specific example, the numerical exposure (selection) is determined in dependence upon the ratio of the vertex's neighbours that are leaf vertices in the network graph to the total number of the vertex's neighbours.

In a still further specific example, the numerical exposure (selection) is determined in dependence upon the ratio of the sum of the incoming values and/or outgoing values to the total number of the vertex's neighbours.

Of course, any combination of these examples may be used to determine the specific exposure (make the selection of the target vertices), to give an overall measure based on several factors.

The resource-flow discrepancy and thus a local risk (of a leak, fraud etc) for each target vertex is calculated as explained above. It is possible to propagate these local risks to try to identify entities which are acting fraudulently by "misdeclaring" resource flow. This misdeclaration may be detectable from anomalies in the direct and/or indirect neighbours in the network graph.

Propagation of the local risk may take place as follows: firstly by normalising a local risk for each target vertex based on the incoming and outgoing flows of resource;

by iteratively updating the local risk for each vertex using the local risk values of the neighbouring vertices to provide a propagated risk value for each target vertex; and by stopping the iterative updates when the network graph converges on a predetermined convergence threshold and/or when the number of iterations exceeds a predetermined iteration threshold; wherein

the propagated risk value is used as detection of a discrepancy.

Propagation may use the well-known PageRank or Weighted PageRank algorithm.

The propagated risk value may be used instead of, or as well as the local risk value to detect a discrepancy. In one preferred embodiment, a local risk (for each target entity) is presented to the user (for example on a representation of the graph, or as a simple value next to an entity name) and then iteratively updated to give a propagated risk and presented to the user during the iterations and at a final value.

It is not mandatory to have the discrepancies computed for the entire network before the propagation can take place. In this case, the result which can be presented to the user is a dynamic and partial solution that may be updated when more is known or more discrepancies are computed.

The method may further comprise weighting the edges between each target vertex and the vertex's neighbours, and using the weighting in the propagation.

In a more standard case, the edges need not bear weights. When weights are added in a directed graph/network, one can determine how the risk can be propagated through the graph and whether the influence of A on B is the same as the reciprocal one (from B to A), assuming A and B are connected and the connection is bidirectional. Weights are not presented in the original PageRank algorithm which can be used for propagation but were added in improved versions.

There may be a need to add new entities to the network graph, after initial construction. Each new entity may be identical or similar to an entity already in the graph, for example having a different name, but essentially referring to the same identity. This is referred to as an overlapping entity or vertex.

Thus the method may include adding new entities to the network graph as new vertices, wherein if none of the new vertices overlaps with an original vertex, an independent network graph to represent relationships between the new vertices.

If there are overlapping entities, the method may further comprise:

adding new entities to the network graph as new vertices wherein;
If a new vertex does not overlap with an original vertex, discrepancies are calculated between the new vertex and the neighbour vertices of the new vertex; and
if a new vertex overlaps with an original vertex, the new and original vertices are reconciled to form a reconciled vertex, by adding any new edges to the original vertex and then any discrepancies are calculated; and
a sub-network graph of the new vertices is generated as an amended part of the network graph.

The method may be implemented on one or more servers or other computers in any preferred manner. In one embodiment, the method further comprises obtaining an adjacency matrix of the network graph on one or more servers when the network graph is generated and compressing the adjacency matrix to provide a compressed sparse row vector; storing the compressed sparse row vector as an adjacency matrix on the one or more servers; and the one or more servers accessing the compressed sparse row vector in order to select target entities and calculate discrepancies.

According to an embodiment of a second aspect of the invention, there is provided a program which when executed on a computer carries out a method for detecting a discrepancy arising from a mismatch between incoming and outgoing flows of resource between a target entity and entities with which the target entity exchanges resources, the method comprising:

receiving data relating to incoming and outgoing resource values of each entity;
generating, using the received data, a network graph to represent relationships between the entities, wherein each entity is represented as a vertex of the network graph and each relationship is represented as an edge, with the incoming and outgoing values of each entity represented as attribute pairs at the vertices;
selecting target vertices using a characteristic of the vertices in the generated network graph; and, for each target vertex:

calculating an outwards difference between the outgoing values of the target vertex and the sum of the incoming resource values from the target vertex into neighbouring vertices, and detecting a resource-flow discrepancy if the internal difference is not equal to zero; and/or

calculating an inwards difference between inwards values of the target vertex and the sum of outgoing values from neighbouring entities into the target vertex and detecting a resource-flow discrepancy if the internal difference is not equal to zero.

According to an embodiment of a third aspect of the invention, there is provided a computer apparatus to detect a discrepancy arising from a mismatch between incoming and outgoing flows of resource between a target entity and entities with which the target entity exchanges resources, the computer apparatus comprising:

an interface to receive data relating to incoming and outgoing resource values of each entity;
a processor to:

generate, using the received data, a network graph to represent relationships between the entities, wherein each entity is represented as a vertex of the network graph and each relationship is represented as an edge, with the incoming and outgoing values of each entity represented as attribute pairs at the vertices;
select target vertices using a characteristic of the vertices in the generated network graph; and, for each target vertex:

calculate an outwards difference between the outgoing values of the target vertex and the sum of the incoming resource values from the target vertex into neighbouring vertices, and detecting a resource-flow discrepancy if the internal difference is not equal to zero; and/or
calculate an inwards difference between inwards values of the target vertex and the sum of outgoing values from neighbouring vertices into the target vertex and detecting a resource-flow discrepancy if the internal difference is not equal to zero; and
a user output to present information on any discrepancies.

An apparatus or computer program according to preferred embodiments of the present invention can comprise any combination of the method aspects. Methods or computer programs according to further embodiments can be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

Thus according to one aspect there is provided a program which, when loaded onto at least one computer configures the computer to become the apparatus according to any of the preceding apparatus definitions or any combination thereof.

According to a further aspect there is provided a program which when loaded onto the at least one computer configures the at least one computer to carry out the method steps according to any of the preceding method definitions or any combination thereof.

In general the computer may comprise the elements listed as being configured or arranged to provide the functions defined. For example this computer may include memory, processing, and a network interface.

The invention can be implemented in digital electronic circuitry, or in computer hardware, firmware, software, or in combinations of them. The invention can be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention can be performed in a different order and still achieve desirable results. Multiple test script versions can be edited and invoked as a unit without using object-oriented programming technology; for example, the elements of a script object can be organized in a structured database or a file system, and the operations described as being performed by the script object can be performed by a test control program.

Elements of the invention may be described using terms such as "generator", "selector", "calculator" etc to describe the function of various parts using a processor and memory. The skilled person will appreciate that such functional terms and their equivalents may refer to parts of the system that are spatially separate but combine to serve the function defined. Equally, the same physical parts of the system may provide two or more of the functions defined.

For example, separately defined means may be implemented using the same memory and/or processor as appropriate.

Preferred features of the present invention will now be described, purely by way of example, with references to the accompanying drawings, in which:-

Figure 1 is a flow chart of a method in a general embodiment;
Figure 2 is a block diagram of main system components in a general embodiment of the invention
Figure 3 is a diagram of a network graph with vertices A to G, including incoming and outgoing resource flow values at the vertices;
Figure 4 is a block diagram of an invention embodiment;
Figure 5 is an excerpt from a network graph including a triangle;
Figure 6 is a flow chart illustrating propagation of discrepancy values;
Figure 7 is a flow chart illustrating addition of new entities to a network graph; and
Figure 8 is an illustration of reconciliation of overlapping entities.

One problem identified by the inventors can be seen as how to design an automated approach to discover such mismatches efficiently and how to predict high risk companies based on past (and/or current) known activities.

Investigating reported revenue for tax purposes is one possible use case of the proposed method and system. Tax authorities should have complete data from all registered businesses in a country. Such tax data filing is required in nearly all countries. For example, in the case of the Spanish tax agency all companies are required to file their transactions with other entities within and outside Spain. In this document, we assume such data are available and are accessible.

As mentioned above, similar technologies can be used in the cases of faulty components or fraud detection in a power grid when there is evident mismatch between power provision and power consumption. In a power grid case, the units may be KW, kilowatt, of power consumption claimed by individuals who pay for the electricity and measurement can be at different layers of substations and regional distributors. Invention embodiments can provide a fast approach to detecting unbalanced consumption and provision. Thus embodiments can be used to detect meter tampering in many utility cases.

In general, the approach outlined herein can be applied to investigate the "flow" balance in a network.

In general, the system runs in two modes, off-line analysis and online analysis. The former updates a database with inferred knowledge and serves the later with such off-line inferences. Human intervention is introduced either when off-line analysis raises some warnings or he/she prompts the system to investigate a particular entity. The system can use a data intensive, data-driven application which can be accommodated, for example, with a plethora of networked commodity computers. A client-server structure can be applied, with the user working on the client side. This is a suitable arrangement purely because of the sheer quantity of data. Multiple servers can be geographically collocated or distributed across multiple data centres.

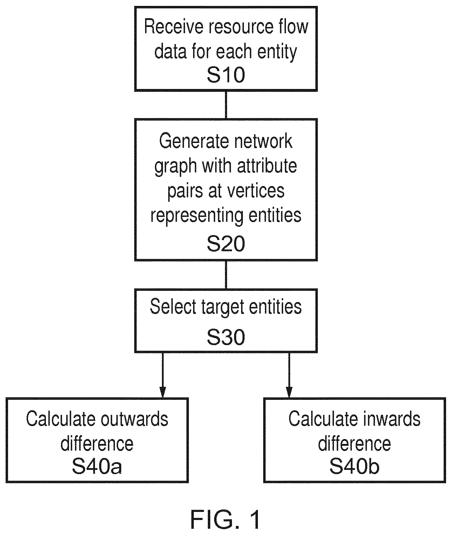

Figure 1 is a flow diagram illustrating a method of detecting a discrepancy in flows of resource between entities according to an embodiment. In step S10 data is received relating to incoming and outgoing flows of resource for each entity. These are resource values, which may have units, for example of megawatts or pounds sterling or million Euros. The data can be received directly or indirectly from the individual entities, from a central authority, such as a utility company or tax authority, or from a mixture of sources. In S20, the received data is used to generate a network graph, in which each entity is represented as a vertex, and each relationship between two entities is an edge between the two vertices representing those entities. The incoming and outgoing values take the form of attribute pairs at the vertices. Hence in a relationship between entity A and entity B, vertex A will be labelled with incoming and outgoing values associated with entity B, and vertex B will be labelled with incoming and outgoing values associated with entity A. In most circumstances, these values are likely to tally, so that if A has the values 15 incoming and 20 outgoing associated with B, then B will have the values 15 outgoing and 20 incoming associated with A.

Once the graph has been constructed in S20, target vertices are selected in step S30, by using a characteristic of the vertices. For example, the characteristic may represent an exposure in the sense that a high exposure vertex has a higher tendency to exhibit discrepancies than other vertices in the graph, perhaps by dint of higher connectivity, high value resource flow or other feature that indicates an increased risk. The characteristic does not rely on detection of discrepancies themselves (which has not yet taken place), but on observations as to what kind of vertex is mostly likely to have a discrepancy. This is a time- and processing power efficient way of cutting down the size of the task whilst keeping the more suspicious entities in consideration.

For each target entity, an outwards difference and/or an inwards difference is calculated in steps S40A and S40B. An outwards difference is calculated in S40A as the difference between the sum of the outgoing values (for all the relationships) at the target vertex and the sum of the incoming resources from the target vertex taken from the neighbouring vertices (direct neighbours only, which are one hop from the target vertex). Normally the difference should be zero (the data at A matches the data from all the neighbours), and if the difference is not zero, then a discrepancy is detected.

An inwards difference is calculated in S40B as the difference between the sum of the incoming values (for all the relationships) at the target vertex and the sum of the outgoing resources from the target vertex taken from the neighbouring vertices (direct neighbours only, which are one hop from the target vertex). Again, the difference should be zero (the data at A matches the data from all the neighbours), and if the difference is not zero, then a discrepancy is detected.

In some situations, the discrepancy can be detected using the inwards difference or using the outwards difference, but in many circumstances both will be calculated to give a fuller check.

Once the discrepancy has been calculated, the method can provide a warning, in the form of an alarm (whether audible or displayed or be automatic email, for example). Note that the alarm could be of an issue in the flows between the entities, or of deliberate misreporting (fraud), or it could be non-specific. Alternatively, any non-zero discrepancies may simply be displayed to the user.

Once the discrepancies for all the target vertices have been calculated, the method may then consider all the other vertices, or further selected vertices. For a really large network graph, it may be impractical to consider all vertices. Alternatively, even for a large graph, the method may continue to calculate discrepancies for (non-target) vertices at times when processing power requirements are otherwise low, and generate a warning or display if such discrepancies are detected.

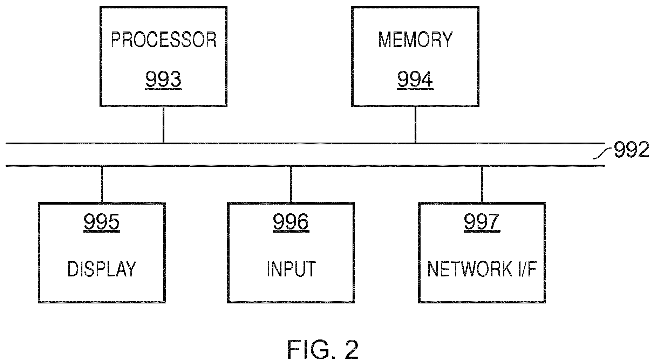

Figure 2 is a block diagram of a computing device, such as a data storage server, which embodies the present invention, and which may be used to implement a method of detecting discrepancies in resource flow between entities. The computing device comprises a processor 993, and memory, 994. The computing device also includes a network interface 997 for communication with other computing devices, for example with other computing devices of invention embodiments. In one example, the computing device cooperates with other computing devices to generate and store the network graph, select target vertices and calculate discrepancies/propagate risks in a distributed manner.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein. That is the processor can execute instructions to receive resource flows, generate part or all of a network graph, select target entities and calculate inwards and/or outwards difference.

The display unit 997 may display a representation of data stored by the computing device, such as the network graph, resource flows or a list of entity names with associated discrepancy/risk values (when calculated) at the vertices. It may also display a cursor and dialog boxes and screens enabling interaction between a user and the programs and data stored on the computing device. The input mechanisms 996 may enable a user to input data and instructions to the computing device. For example, the user may select vertex characteristics which are used to identify target vertices.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The processor 993 (or plurality thereof) executes processing instructions (a program) stored on a memory 994 and exchanges data via a network I/F 997. In particular, the processor 993 executes processing instructions to receive, via the network I/F, incoming and outgoing resource values of the entities to be included in part or all of the network graph, along with identification of the entities. Furthermore, the processor 993 may execute processing instructions to generate part or all of the network graph as described herein, to select target entities and to calculate inwards and outwards differences for the target entities of part or all of the network graph, to detect discrepancies. It may store part or all of the network graph and related data as an adjacency matrix, potentially as a compressed sparse row vector, on a connected storage unit and/or transmit the graph/data, via the network I/F 997, to other devices.

Methods embodying the present invention may be carried out on a computing device such as that illustrated in Figure 2. Such a computing device need not have every component illustrated in Figure 2, and may be composed of a subset of those components. A method embodying the present invention may be carried out by a single computing device in communication with one or more data storage servers via a network. The computing device may be a data storage itself storing the network graph annotated with incoming and outgoing resource flows, and discrepancies and propagated risks when calculated.

A method embodying the present invention may be carried out by a plurality of computing devices operating in cooperation with one another. One or more of the plurality of computing devices may be a data storage server storing at least a portion of network graph. The entire network graph may be composed of multiple subgraphs. When the entire network graph is distributed to different servers, each server can process the network in parallel on the fragment of graph allocated to it. The computation is effectively vertex local processing (also known as vertex programming). For massive parallel architecture, all vertices can start processing in parallel. Otherwise, the vertices can only be processed sequentially. In this case, the system needs to decide which vertices should be processed first as target vertices. Other vertices can be given lower processing priority and be processed afterwards (or not at all).

In the remainder of this document, a running example is used to explain the technological details of invention embodiments. This, however, should not be understood as a limitation of the applicability of the proposed method. In general, the method can be applied to any resource-flow scenarios when inter-entities connections can be quantified.

Working example

Fraudulent behaviours (or behaviours that present high risk of fraud/leaks etc) can be buried in normal trading behaviours. This section uses the normal supply chain as an example. Assume that there is a list of companies $C =$

$\{c_0, \ldots, c_i, c_j, \ldots c_n\}$, who frequently trade among themselves. Fraudulent behaviour may appear when the data from suppliers do not match the data from recipients. For instance, a payment may have been made for work not carried out, duplicated payments or payment made to ghost entities, etc. Tax evasion may occur as a result of such mismatches. However, the inventors have come to the realisation that a simple method of checking data from A against data from B is not sufficient to detect more complex discrepancies.

Table 1 below illustrates resource values between entities A and B in the form of financial data reported to a tax authority.

Table 1

| Agents | | Reported | | Imputed | |
|---|---|---|---|---|---|
| Reporting | Imputing | Revenue (Income) | Payment (Cost) | Revenue (Income | Payment (Cost) |
| A | B | 12 | 15 | 20 | 15 |
| B | A | 15 | 20 | 15 | 12 |

A reports a payment to B of 15K Euro for goods or services and revenue of 12k Euro due to the transaction with B. This revenue is not net revenue, but just gives the cash flow. For the first row, B is considered the imputing party and its figures are borrowed from the second row where it reported when dealing with A a payment of 20K Euro and revenue 15k Euro. This already highlights a mismatch in the figures and suggests that at least one of the firms is misreporting.

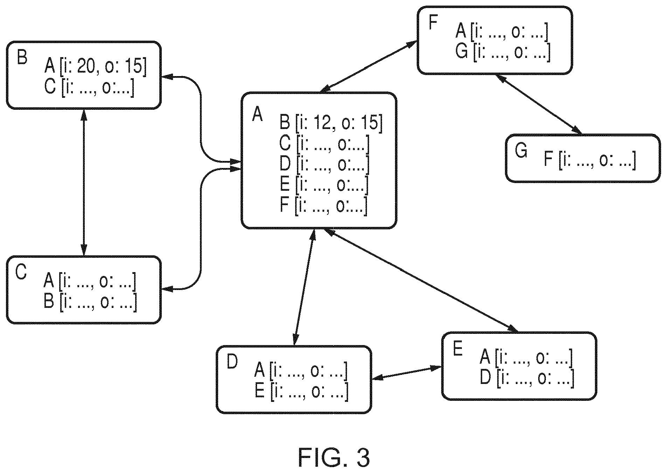

The graph including vertices for A and B and some others may be as shown in figure 3.

In order to avoid having properties on the edges and/or a directed graph, which increases the complexity of graph handling, the income and cost numbers are defined as attributes at vertices. For fast retrieval, this are defined as key-value pairs where keys are neighbouring vertices and values are pair of income and cost figures. In the above figure, A-B-C and A-D-E are neighbourhood triangles, suggesting that A should be investigated earlier than others as a target vertex.

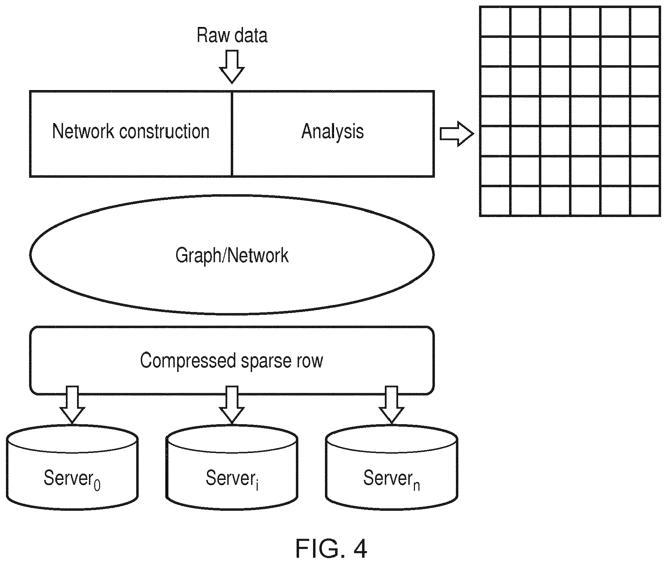

The architectural basis of the proposed solution is illustrated in figure 4. Here, raw data is used for network construction in a network construction module which generates the network graph and also for later analysis in an analysis module which detects discrepancies, providing the matrix format shown to the right of the figure. These modules may be provided by servers 0...i...n.. or in (a) processor(s) elsewhere. The graph/network is converted to a compressed sparse row or CSR format and stored on servers 0...i...n.. according to any convenient distribution mechanism.

Thus, based on the raw data, a supply network is constructed which also captures the flow (of money in this example) among different entities involved. A space efficient data structure is selected to facilitate distributed data storage while not much sacrificing the computational efficiency. The analysis module applies graph based algorithms to emerge and extract suspicious patterns out of the "structured" data.

The set of supplier/consumer links effectively forms a network of trading relationships. Graph-based algorithms can then be applied to screen out trading connections by checking for discrepancies. When predicting high risk companies to target, graph based methods can also be applied as explained herein.

The solution of this embodiment includes:

1. A method to leverage a vast parallel programming environment to examine existing fraud cases in the supply chain.
2. A method to compute high risk entities for potential fraudulent behaviours.

Constructing supply chain network

The supply chain network is constructed as an attributed, undirected graph. Such a graph is defined as follows:

$$G = \langle V, E \rangle,$$

where $V$ is a set of vertices and E a set of edges of $(v_i, v_j)$, $v_i, v_j \in V$. $\gamma$ is a function: $\gamma: V \rightarrow A$ that maps a vertex to a set of attributes. Attributes can be used to record properties at the vertices. For instance, it can be used to indicate how much influence a vertex receives from a neighbouring vertex and/or impose upon a neighbouring vertex. Here, the attributes represent incoming and outgoing resource flows. The advantage of putting edge-oriented value at the end vertices is that the graph can be simplified to an undirected one which can be less expensive than directed graphs for some algorithms.

The supply chain network can be constructed as follows:

1. For each entity/company (e.g. registered with the tax office or monitored by enterprise social responsibility organisations, or registered with a utility company), a vertex is created to record the information.
2. A trading relationship between two entities defines an edge between the corresponding vertices.
3. At each vertex v, a pair of attribute is declared for each edge to record the incoming and outgoing influence values of the neighbouring vertex connected to *v*

The attribute values may also be adjusted according to a given time window. In this case, the attributes can be indexed with edges as $\langle v_i, v_j \rangle$: *f(t)* and $\langle v_j, v_i \rangle$:*g(t)* as functions over time.

There may be multiple values that are recorded for each attribute. For instance, the value can reflect a cumulative resource flow or discrepancy value over the past. It can also be an adjusted discrepancy value for a given time period. For instance, one can investigate the connection between two entities over a particular fiscal year or within the timeframe of another investigation. A trie (digital tree or prefix tree) based index can be used to fragment data series data and fast retrieve data based on the range of time segments.

Some domain specific restriction may be applied when constructing the graph/network. For instance, when constructing a snap-shot graph/network for the supply chain, only closed deals/purchasing can used to avoid accidental discrepancies due to transactions that have not yet gone through. The assumption is that tax applies only to those closed deals.

**Data structure and storage**

The typical storage data structure of a graph/network is an adjacency matrix. The resultant network can be sparse and thus cause significant redundancy and inefficiency on disk utilisation. The compressed sparse row (CSR) approach is adapted to reduce disk usage.

In case the overall data size exceeds the capacity of a single data server, the CSR vector is evenly distributed to multiple servers. The column-indices array is broken based on row-offsets to ensure one adjacency list is not stored on different machines. This is to reduce network communication overhead during level-synchronised breadth first search.

**Discovering discrepancies**

The key purpose is to discover discrepancies among cumulative incoming and outgoing edges. It is expected that for connected components of a graph, the overall inwards and outwards influence factors should be balanced. Imbalanced components may signify a highly risky case. The cumulative values are computed straightforwardly as follows: let $O_t$ denote the total value of outwards influence value (e.g. the total sales or provision reported by a company), $O_{\langle i,j \rangle}$ the outwards value along edge $\langle i, j \rangle$, and $I_t$ and $I_{\langle i,j \rangle}$ represent the inwards values accordingly.

1. Compute all the 1-hop neighbours of a vertex v,
2. For the neighbours *N* of *v*, compute

$$\Delta_{\text{out}}(O, I) = O_t - \sum_{j \in N_v} I_{\langle v,j \rangle}$$

Basically, the difference between outwards and the sum of neighbouring inwards values are calculated. Discrepancies, i.e. $\Delta_{\text{out}} \neq 0$, can indicate mistakes in finance reports.
3. This result is cross-referenced with inwards difference, which is computed as follows:

$$\Delta_{\text{in}}(O, I) = I_t - \sum_{j \in N_v} O_{\langle v,j \rangle}$$

Neighbours of a vertex can be easily retrieved from the corresponding local CSR vector.

**Parallel processing**

At each server, parallel processes are running, e.g. leveraging the inherent multi-thread capacity of a Graphics Processing Unit (GPU). Each vertex is assigned to one GPU thread to maximise the parallelism. Firstly, only one-hop neighbours need to be retrieved. Assigning one vertex to a dedicated thread as mentioned above is possible and will not result in significant redundancy and communication overhead. Secondly, though a potentially large number of threads can run on a GPU (e.g. up to 23000 CUDA threads can run on a GeForce GTX 480 GPU) the sheer number of vertex can still be much greater. A strategy is needed to select a start-up set of target vertices, and indeed not all the vertices are necessarily fully processed. GPU based parallelisation imposes some restrictions on the problem itself, making the supply chain network based fraud detection particular applicable.

For each vertex, its CSR vector is retrieved as $V_{CSR}$, for each $v_i \in V_{CSR}$, $\rho(v_i) \to s_j$ obtain the vertex's server. Each server holds a complete adjacency list and will broadcast to all the servers holding the corresponding neighbouring vertices. Upon receiving the message, $s_j$ sends the corresponding values back and updates the status of $v_i$ held locally at the server.

**Selection of target vertices**

Calculating $\Delta_{out}$ or $\Delta_{in}$ for all the vertices may be inefficient for large network. The following heuristics can be applied to select the initial groups of highly suspicious vertices.

The assumption is that characteristics of a vertex's neighbours should follow a power law that can be learnt from the entire network. Any of or any combination of the following characteristics can be used to detect high risk vertices.

1. Number of neighbours (vertex degree) vs. number of triangles involving neighbours

$$\alpha = \frac{|\{x | x \in \text{Neighbour}(v) \wedge \exists y, z.\text{triangle}(x, y, z)\}|}{\text{Degree}(v)}$$

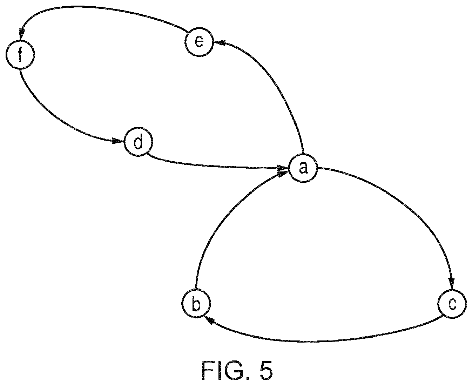

The assumption is that when a large number of neighbours of a vertex present triangle patterns, it is highly likely the vertex is a high risk vertex. Figure 5 depicts a simple example of a subgraph with a triangle. Neighbouring vertices b, c forms a triangle with a, while e, f, d, a do not. Triangles in graphs are often used as key heuristics for fraud detection.

2. Number of neighbours (vertex degree) vs. number of leaf vertices (node of vertex degree 1) among the neighbours

$$\beta = \frac{|\{x | x \in \text{Neighbour}(v) \wedge \forall y.\langle x, y \rangle \in E \to y = v\}|}{\text{Degree}(v)}$$

The assumption is that when many of one's trading partners are only one time or one partner traders, it presents a high risk.

3. Number of neighbours (vertex degree) vs. overall trading value/cash flow (the sum of outwards and inwards values)
The assumption is that when the trading value is disproportionately large comparing to the "normal" trading volume computed based on power law distribution, it implies a high risk.

The above are only example heuristics that can be leveraged. Other graph-oriented measures can be applied if a clear deviation from power law distribution can be identified. In general, other power-law based characteristics can be learnt based on the entire population.

**Propagating bad behaviour**

It is possible that a discrepancy detected at one vertex is a result of foul play upstream in the supply chain, where the real cause of imbalance is covered up with apparently legitimate finance figures. This can be discovered through discrepancies propagation.

From the calculation of discrepancies, each vertex is labelled a local risk/discrepancy value. A weighted PageRank algorithm can be used to flood local risk values to neighbours along edges with either normalised outwards/inwards values or normalised aggregated values (to signify the overall ties between vertices). The term "flooding" is used to describe cascading local vertex influence along the graph edges to direct and indirect neighbours. PageRank is a type of flooding method. In essence, each vertex is initialised with a risk value, which is fine-tuned using this flooding method.

When the algorithm converges, the aggregated/propagated risk value at each vertex reflects the significance of fraudulent behaviours imposing on the local vertex.

Considering this process in more detail, an initial risk value is assigned at each vertex as the normalised (cash) flow discrepancies. This value can be normalised as $\sqrt{(\delta - \bar{\delta})^2}$ to avoid negative values. This initial risk value is then considered as the initial state of a vertex. All edges are associated with edge weights, w. Edge weights are introduced to generalise the original PageRank algorithm. Here the edge weights can be assigned by users to a particular type of cash flow (e.g. cash flow during a particular time window, or cash flow between two types of entities, where entity type can be defined by users and recorded as vertex attributes).

The system then iteratively updates all neighbours of a vertex using the initial states and the edge weights. In the subgraph of figure 5, assume vertex "a" has an initial value of $x_a$. It can be used to update the vertex "c" using a function: $x_c^{i+1} = f(x_a^i, x_c^i, w_{\langle a,c \rangle})$. This iterative process continues until the entire graph converges, i.e. $\Delta(x_c^{i+1}, x_c^i) \leq \alpha$, where $\alpha$ is a predefined threshold and $\Delta$ is the difference between a current value and a value of a previous iteration, or until the number of iterations $i$ reaches a predefined limit, i.e. $i \geq n$. There are existing software tools to perform such a weighted PageRank process.

Outputs are the updated vertex risk values when the flooding/iteration terminates. This can be a list of key-value pairs where key is the vertex id and value is the refined risk value.

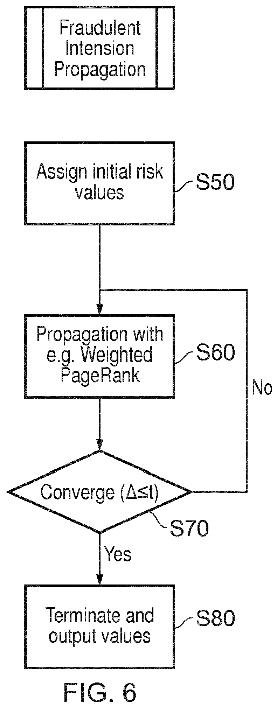

Figure 6 is a flow chart illustrating propagation of discrepancy values. In step S50, initial risk values are based on discrepancies. In step S60 the risks are propagated using, for example, Weighted PageRank. In step S70, there is a check whether the step change in each iteration is below or at a convergence threshold. If not, the propagation continues. If the step change is at or below the threshold, the process has finished and in step S80, there is termination and output of the final values.

A known propagated risk value, acquired when the propagation converges, can then be used to combine with other graph-based rules to identify high risk entities when new data are added and more analysis is necessary, as explained in more detail below.

## Adding New Entities

So far, the network graph has been constructed from the scratch. This section treats new insertions to the graph when for example new businesses register with the tax office. This can be triggered by user input.

There are two update scenarios envisaged:

1. Reconciling two sets of data. In this case, we assume both sets of vertices are complete and make sense in their own right. In this case, the target is to align/reconcile apparently similar vertices from each data set to join the graphs. Propagation can then be carried out once the alignment and merge is done. The aligned vertices will then become bridging vertices, allowing propagation to be carried out in the merged parts. This is discussed in more detail below.
2. Adding new reports to an existing data set. The assumption here is that vertex identify is known already. This effectively is simply updating the flows on edges.

Vertices in the newly added subgraph to an existing network can be either overlapping with existing vertices (thus representing the same or a closely related entity) or else non-overlapping. In the former case, the overlapping vertex needs to be reconciled with existing network. At the same time, the non-overlapping vertices can be processed (e.g. the discrepancy calculation). Boundary vertices between the two sets of data may be reconciled overlapping vertices.

When the non-overlapping vertices are processed, the system considers and records whether such process affects (changes the values of) the overlapping/boundary vertices. In order to improve performance, only those are changed/affected will be re-processed after the newly added parts are merged.

Update to the network with a new sub-network or updated sub-network will be performed in two different situations. If the sub-network can be aligned with existing entities, a full network re-processing may need to be performed

Otherwise, the processing can be restricted to the newly-changed sub network, which is effectively an independent graph.

In the case alignment is possible, the re-processing can be performed in two stages:

1) Confine the process in the sub-network up to the boundaries
The sub network is normally small in size. If multiple sub-networks present, parallel process all the sub networks simultaneously.

2) Parallel processing from all the changed boundary entities.

Thus the process can have two steps in general, which are: online processing where alignment and those values/entities directly affected are reprocessed; and offline processing where the changed values are to be widely propagated to other potentially affected entities/parts.

In the first step, the alignment and local update is carried out up to the boundary entities. In the second step, if there are entities whose status has been updated in the first step, such changes will have to be reflected in other parts of the graph/network. In this case, a full network reprocessing needs to be carried out. Such reprocessing is likely to be performed when system resource permits.

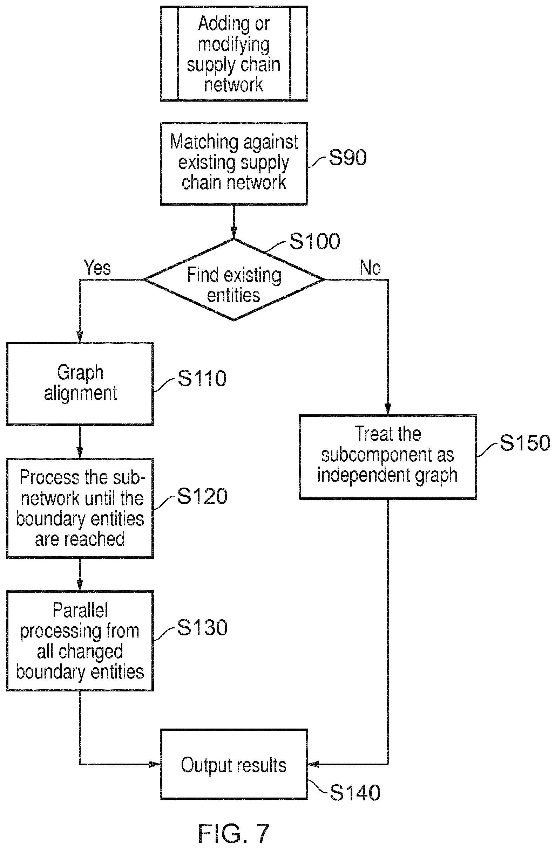

Figure 7 is a flow chart illustrating addition of one or more new entities to a network graph. Firstly in step S90, the new entities are matched against an existing network. Then if existing entities (overlaps) or relationships with existing entities are found in step S100, then there is a graph alignment step S110 to identify matching entities

Steps S120 and S130 are as set out in the two stages 1) and 2) above for local updates up to the boundary and then, when resource permits or when necessary, larger scale updates . The results are output in step S140. If there are no existing entities or relationships with existing entities, then the new entities are treated as an independent graph in step S150.

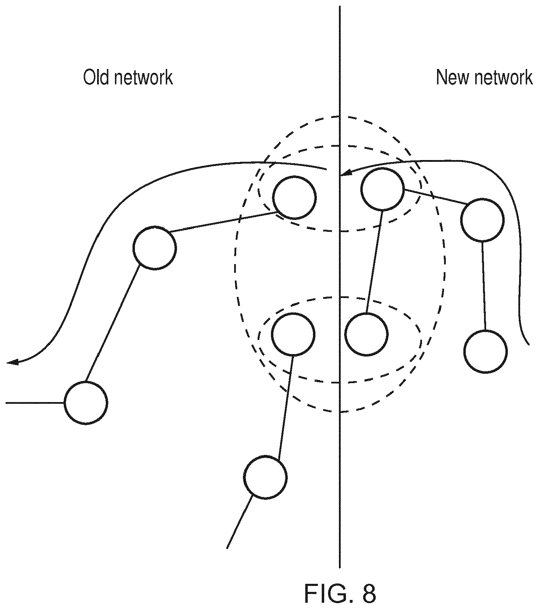

Figure 8 shows an example of reconciliation between an old network (of which only a few vertices are shown) and a new network (also only partially shown). The four vertices on the right are newly added ones, while those on the left are existing ones. The outer ellipse indicates overlapping vertices and the inner ellipses outlines reconciliation mappings between the same entity in the old network and the new network.

If updating triggers full network re-computation, the same risk calculation and high risk vertex selection procedure can be applied, taking into account the newly added part as well.

### Benefits

Some of the benefits of the proposed approach in invention embodiments can be seen from the following aspects.

1. A highly parallel approach allows the available computing resources to be fully exploited. The proposed approach can scale up easily and can improve system performance.

2. the propagation model can allow detection of fraud and reveal how related companies can be influenced and involved with fraudulent behaviours.

### Claims

1.  A computer-implemented method for detecting a discrepancy arising from a mismatch between incoming and outgoing flows of resource between a target entity and entities with which the target entity exchanges resources, the method comprising:

    receiving data relating to incoming and outgoing resource values of each entity;
    generating, using the received data, a network graph to represent relationships between the entities, wherein each entity is represented as a vertex of the network graph and each relationship is represented as an edge, with the incoming and outgoing values of each entity represented as attribute pairs for each relationship at the vertices;
    selecting target vertices; and, for each target vertex:

    calculating an outwards difference between the sum of the outgoing values at the target vertex and the sum of the incoming resource values from the target vertex at neighbouring vertices, and detecting a resource-flow discrepancy if the outwards difference is not equal to zero; and/or
    calculating an inwards difference between the sum of incoming values at the target vertex and the sum of outgoing values at neighbouring vertices into the target vertex and detecting a resource-flow discrepancy if the inwards difference is not equal to zero.

2.  The method according to claim 1, wherein the selection of the target vertices is made using a numerical exposure and indicates a target vertex if the numerical exposure is beyond a threshold.

3.  The method according to claim 1 or 2, wherein the numerical exposure is based on connectivity of the vertex, preferably on the level of neighbour vertices which are leaf vertices, or on the level of triangles including the vertex in the network graph.

4. The method according to any preceding claim, wherein the numerical exposure is based on a level of ingoing and/or outgoing resource flow in comparison to the number of neighbour vertices.

5. The method according to any preceding claim, wherein the numerical exposure is determined in dependence upon the ratio of the number of triangles including the vertex's neighbours to the total number of the vertex's neighbours.

6. The method according to any preceding claim, wherein the numerical exposure is determined in dependence upon the ratio of the vertex's neighbours that are leaf vertices in the network graph to the total number of the vertex's neighbours.

7. The method according to any preceding claim, wherein the numerical exposure is determined in dependence upon the ratio of the sum of the incoming values and/or outgoing values to the total number of the vertex's neighbours.

8. The method according to any preceding claim, further comprising:

   normalising a local risk for each target vertex based on the incoming and outgoing flows of resource;
   iteratively updating the local risk for each vertex using the local risk values of the neighbouring vertices to provide a propagated risk value for each target vertex; and
   stopping the iterative updates when the network graph converges on a predetermined convergence threshold and/or when the number of iterations exceeds a predetermined iteration threshold; wherein
   the propagated risk value is used as detection of a discrepancy.

9. The method according to claim 8, further comprising:

   weighting the edges between each target vertex and the vertex's neighbours, and using the weighting in the propagation.

10. The method according to any preceding claim, further comprising:

    adding new entities to the network graph as new vertices, wherein
    if none of the new vertices overlaps with an original vertex, an independent network graph to represent relationships between the new vertices.

11. The method according to any preceding claim, further comprising:

    adding new entities to the network graph as new vertices wherein;
    If a new vertex does not overlap with an original vertex, discrepancies are calculated between the new vertex and the neighbour vertices of the new vertex; and
    if a new vertex overlaps with an original vertex, the new and original vertices are reconciled to form a reconciled vertex, by adding any new edges to the original vertex and then any discrepancies are calculated; and
    a sub-network graph of the new vertices is generated as an amended part of the network graph.

12. The method according to any preceding claim, further comprising:

    obtaining an adjacency matrix of the network graph on one or more servers when the network graph is generated and compressing the adjacency matrix to provide a compressed sparse row vector;
    storing the compressed sparse row vector as an adjacency matrix on the one or more servers; and
    the one or more servers accessing the compressed sparse row vector in order to select target entities and calculate discrepancies.

13. A method according to any preceding claim, wherein;

    the resource is physical or financial and the discrepancy indicates a financial fraud.

14. A program which when executed on a computer carries out a method for detecting a discrepancy arising from a mismatch between incoming and outgoing flows of resource between a target entity and entities with which the target entity exchanges resources, the method comprising:

receiving data relating to incoming and outgoing resource values of each entity;

generating, using the received data, a network graph to represent relationships between the entities, wherein each entity is represented as a vertex of the network graph and each relationship is represented as an edge, with the incoming and outgoing values of each entity represented as attribute pairs at the vertices;

selecting target vertices using a characteristic of the vertices in the generated network graph; and, for each target vertex:

calculating an outwards difference between the outgoing values of the target vertex and the sum of the incoming resource values from the target vertex into neighbouring vertices, and detecting a resource-flow discrepancy if the internal difference is not equal to zero; and/or

calculating an inwards difference between inwards values of the target vertex and the sum of outgoing values from neighbouring entities into the target vertex and detecting a resource-flow discrepancy if the internal difference is not equal to zero.

15. A computer apparatus to detect a discrepancy arising from a mismatch between incoming and outgoing flows of resource between a target entity and entities with which the target entity exchanges resources, the computer apparatus comprising:

an interface to receive data relating to incoming and outgoing resource values of each entity;

a processor to:

generate, using the received data, a network graph to represent relationships between the entities, wherein each entity is represented as a vertex of the network graph and each relationship is represented as an edge, with the incoming and outgoing values of each entity represented as attribute pairs at the vertices;

select target vertices using a characteristic of the vertices in the generated network graph; and, for each target vertex:

calculate an outwards difference between the outgoing values of the target vertex and the sum of the incoming resource values from the target vertex into neighbouring vertices, and detecting a resource-flow discrepancy if the internal difference is not equal to zero; and/or

calculate an inwards difference between inwards values of the target vertex and the sum of outgoing values from neighbouring vertices into the target vertex and detecting a resource-flow discrepancy if the internal difference is not equal to zero; and

a user output to present information on any discrepancies.

FIG. 1

FIG. 2

FIG. 3

Raw data

Network construction | Analysis

Graph/Network

Compressed sparse row

Server$_0$    Server$_i$    Server$_n$

FIG. 4

FIG. 5

Fraudulent
Intension
Propagation

Assign initial risk
values — S50

Propagation with
e.g. Weighted — S60
PageRank

No

Converge (Δ≤t)

S70

Yes

Terminate and
output values — S80

FIG. 6

FIG. 7

Old network

New network

FIG. 8

Europäisches
Patentamt

European
Patent Office

Office européen
des brevets

# EUROPEAN SEARCH REPORT

Application Number

EP 17 16 3169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/246112 A1 (ABHULIMEN KINGSLEY E [US] ET AL) 3 November 2005 (2005-11-03) * abstract * * paragraphs [0015] - [0027] * * paragraphs [0058] - [0079] * ----- | 1-15 | INV. G06Q10/08 G06Q50/06 |
| A | US 2015/339412 A1 (VITALETTI MARCELLO [IT]) 26 November 2015 (2015-11-26) * abstract * * paragraphs [0003] - [0004] * * paragraphs [0022] - [0032]; figures 1, 2A-2C * ----- | 1-15 | |
| A | JP 2014 054151 A (TOSHIBA CORP) 20 March 2014 (2014-03-20) * abstract * ----- | 1-15 | |
| A | US 7 920 983 B1 (PELEG AMIR [IL] ET AL) 5 April 2011 (2011-04-05) * abstract * * column 8, line 12 - column 13, line 26; figures 1,2 * ----- | 1-15 | TECHNICAL FIELDS SEARCHED (IPC) |
| A | US 2013/211797 A1 (SCOLNICOV HAGGAI [IL] ET AL) 15 August 2013 (2013-08-15) * abstract * * paragraphs [0012] - [0017] * ----- | 1-15 | G06Q |

The present search report has been drawn up for all claims

| Place of search | Date of completion of the search | Examiner |
|---|---|---|
| Munich | 27 September 2017 | Dedek, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 3169

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2017

| Patent document cited in search report | | | Publication date | Patent family member(s) | | | Publication date |
|---|---|---|---|---|---|---|---|
| US 2005246112 | A1 | | 03-11-2005 | NONE | | | |
| US 2015339412 | A1 | | 26-11-2015 | GB | 2526300 | A | 25-11-2015 |
| | | | | US | 2015339412 | A1 | 26-11-2015 |
| JP 2014054151 | A | | 20-03-2014 | NONE | | | |
| US 7920983 | B1 | | 05-04-2011 | AR | 080458 | A1 | 11-04-2012 |
| | | | | AU | 2011200949 | B1 | 09-06-2011 |
| | | | | BR | PI1101199 | A2 | 16-10-2012 |
| | | | | CA | 2792029 | A1 | 09-09-2011 |
| | | | | CN | 102884407 | A | 16-01-2013 |
| | | | | CO | 6630098 | A2 | 01-03-2013 |
| | | | | EP | 2472467 | A1 | 04-07-2012 |
| | | | | ES | 2420865 | T1 | 27-08-2013 |
| | | | | FR | 2957097 | A1 | 09-09-2011 |
| | | | | GB | 2478432 | A | 07-09-2011 |
| | | | | GB | 2499113 | A | 07-08-2013 |
| | | | | HK | 1158305 | A1 | 14-11-2014 |
| | | | | IE | 86368 | B1 | 26-03-2014 |
| | | | | IE | 20110098 | A1 | 14-09-2011 |
| | | | | JP | 2013521558 | A | 10-06-2013 |
| | | | | KR | 20140145637 | A | 24-12-2014 |
| | | | | PH | 12011000083 | A1 | 04-08-2014 |
| | | | | RU | 2012142174 | A | 10-04-2014 |
| | | | | SG | 173992 | A1 | 29-09-2011 |
| | | | | SG | 193853 | A1 | 30-10-2013 |
| | | | | TW | 201140267 | A | 16-11-2011 |
| | | | | TW | 201303785 | A | 16-01-2013 |
| | | | | US | 7920983 | B1 | 05-04-2011 |
| | | | | US | 2011215945 | A1 | 08-09-2011 |
| | | | | WO | 2011107864 | A2 | 09-09-2011 |
| | | | | ZA | 201207123 | B | 26-03-2014 |
| US 2013211797 | A1 | | 15-08-2013 | US | 2013211797 | A1 | 15-08-2013 |
| | | | | WO | 2013121298 | A2 | 22-08-2013 |

EPO FORM P0459

For more details about this annex : see Official Journal of the European Patent Office, No. 12/82